# EUROPÄISCHE PATENTSCHRIFT

(11) **EP 2 509 818 B1**
(45) Veröffentlichungstag und Bekanntmachung des Hinweises auf die Patenterteilung: **30.04.2014**
(21) Anmeldenummer: 10776585.1
(22) Anmeldetag: 03.11.2010
(51) Int. Cl.: B60L 11/18, H02J 5/00, H01F 17/06, H01F 38/14, H02J 7/02

(54) **ELEKTROGERÄT MIT MITTELN ZUR ERZEUGUNG EINES WECHSELSTROMES UND ANLAGE**
ELECTRICAL APPLIANCE HAVING MEANS FOR PRODUCING AN ALTERNATING CURRENT AND SYSTEM
APPAREIL ÉLECTRIQUE POURVU DE MOYENS DESTINÉS À PRODUIRE UN COURANT ALTERNATIF ET INSTALLATION

(30) Priorität: 12.11.2009 DE 102009052733
(43) Veröffentlichungstag der Anmeldung: 17.10.2012
(73) Patentinhaber: SEW-EURODRIVE GmbH & Co. KG, 76646 Bruchsal (DE)
(72) Erfinder: SCHNEIDER, Bernhard, 68794 Oberhausen-Rheinhausen (DE); SCHROEDER, Detlev, 68809 Neulussheim (DE); UHL, Thomas, 76646 Bruchsal (DE); SCHMIDT, Josef, 76676 Graben-Neudorf (DE)
(86) Internationale Anmeldenummer: PCT/EP2010/006689
(87) Internationale Veröffentlichungsnummer: WO 2011/057733

(56) Entgegenhaltungen:
- DE-A1- 10 053 373
- DE-A1-102008 019 318
- GB-A- 2 347 801
- JP-A- 2007 125 926
- US-A1- 2008 246 577

## Beschreibung

Die Erfindung betrifft ein Elektrogerät mit Mitteln zur Erzeugung eines Wechselstromes und eine Anlage.

Netzgespeiste Umrichter zur Erzeugung einer Wechselspannung mit einer Frequenz, welche höher als die Netzfrequenz ist, sind bekannt.

Außerdem ist bekannt, dass beim Auftrennen von Leitungen, welche aus einer Stromquelle versorgt sind, Lichtbögen entstehen und das Risiko von Verschweißungen oder Bränden besteht.

Aus der DE 100 53 373 A1 ist ein System zur berührungslosen Übertragung von elektrischer Energie an entlang eines langgestreckt verlegten Primärleiter bewegliche Fahrzeuge bekannt.

Aus der DE 10 2008 019 318 A1 ist ein Anpasstransformator für ein solches System bekannt.

Aus der US 789 8379 B1, die am 1.3.2011 veröffentlicht wurde, ist bekannt, einen Ferrit in Ausnehmungen einer PCB Leiterplatte einzuschieben.

Aus der JP 2007 125926 A ist ein System zur berührungslosen Übertragung von elektrischer Energie an entlang eines langgestreckt verlegten Primärleiter bewegliche Fahrzeuge bekannt.

Aus der GB 2347801 ist ein Transformator bekannt zur Übertragung von elektrischer Energie an ein Fahrzeug, um dessen Batterie zu beladen.

Der Erfindung liegt daher die Aufgabe zugrunde, ein sicheres Abschalten bei einer Anlage weiterzubilden.

Erfindungsgemäß wird die Aufgabe bei dem Elektrogerät nach den in Anspruch 1 und bei der Anlage nach den in Anspruch 12 angegebenen Merkmalen gelöst.

Wichtige Merkmale der Erfindung bei dem Elektrogerät mit Mitteln zur Erzeugung eines Wechselstromes sind, dass das Gerät ein Anpassmodul umfasst, das lösbar an ein Zentralmodul verbindbar ist,
wobei das Anpassmodul einen Wechselrichter umfasst, der eine Gyratoranordnung mit einer Wechselspannung versorgt,
wobei der Ausgangsstrom der Gyratoranordnung der Primärwicklung eines Transformators zugeführt wird,
wobei Wechselrichter, Gyratoranordnung und Primärwicklung im Zentralmodul angeordnet sind,
wobei das Anpassmodul eine Sekundärwicklung umfasst, aus der über Leitungsabschnitte eine Stromschleife einer das Elektrogerät umfassenden Anlage versorgbar ist,
wobei mindestens ein Anpassteil mit dem Anpassmodul lösbar verbindbar ist, wobei das Anpassteil einen Leitungsabschnitt zumindest teilweise umgibt, wobei das Anpassteil die Induktivität des Leitungsabschnittes vergrößert.

Von Vorteil ist dabei, dass mittels mechanischem Lösen der mechanischen Verbindung zwischen Anpassmodul und Zentralmodul eine sichere Trennung der Versorgung der Stromleiterschleife ermöglicht ist. Somit wird das Brandrisiko vermindert. Dabei ist die mechanische Verbindung des Anpassmoduls mit dem Zentralmodul durch eine Schraubverbindung ausführbar oder durch andere Verbindungsarten, wie kraftschlüssiges und/oder formschlüssiges Verbinden. Beispielsweise ist auch eine Einklipsverbindung oder ein schienengeführte Verbindung ermöglicht. Mittels des mechanischen Entfernens wird auch die Kopplung des Sekundärwicklung des Transformators von der Primärwicklung des Transformators unterbrochen und die Stromversorgung der Stromleiterschleife versiegt. Die erfindungsgemäße Anordnung ist auch in explosionsgefährdeter Umgebung einsetzbar, da keinerlei Funken zu befürchten sind beim Trennen oder Verbinden.

Vorteilig ist weiter, dass keine elektrisch leitende Verbindung zwischen Anpassteil und Stromleiterschleife besteht, insbesondere wobei eine elektrische Isolierschicht, insbesondere Luftabstand, zwischen Anpassteil und elektrischer Leitung vorhanden ist

Bei einer vorteilhaften Ausgestaltung ist die Stromschleife an Anschlusselemente des Anpassmoduls elektrisch verbindbar, wobei mindestens ein Anschlusselement direkt oder über einen Leitungsabschnitt mit der Sekundärwicklung verbunden ist. Von Vorteil ist dabei, dass ein Hinleiter und ein mit diesem verbundener Rückleiter an den Anschlusselementen anschließbar ist und somit eine Stromleiterschleife versorgbar ist. Zusätzlich sind in der Stromleiterschleife Kapazitäten zum Anpassen der Leiter-Induktivität einfügbar. Die Anschlusselemente sind dabei vorzugsweise in der Gehäusewand des Anpassmoduls befestigt, um ein einfaches Verbinden mit der Stromleiterschleife zu ermöglichen.

Bei einer vorteilhaften Ausgestaltung weist das Anpassteil jeweils eine magnetische Permeabilität auf, die größer als 10 ist, insbesondere größer als 100 oder größer als 1000. Von Vorteil ist dabei, dass durch Einfügen oder Weglassen des permeablen Anpassteils, insbesondere hochpermeablen Anpassteils, die Induktivität des Leitungsabschnittes, welcher von dem Anpassteil umgeben oder zumindest teilweise umgeben ist, erhöhbar ist und somit ein Anpassen der Resonanzfrequenz an die eingespeiste Frequenz ausführbar ist. Außerdem sind mit dem gleichen Elektrogerät verschieden lange Stromleiterschleifen versorgbar, wobei die unterschiedlichen Leiter-Induktivitäten anpassbar sind.

Die Form der Anpassteile ist vorzugsweise U-förmig oder C-förmig. Somit ist eine einfache Montage aus radialer Richtung ermöglicht.

Bei einer vorteilhaften Ausgestaltung sind mehrere Anpassteile seriell an der Leitung anordenbar. Von Vorteil ist dabei, dass der Bereich für die Anpassung der Induktivität der Leitung weit ist.

Bei einer vorteilhaften Ausgestaltung ist die Anzahl der Anpassteile derart gewählt, dass die an der Sekundärseite des Transformators angeordneten Induktivität und Kapazität derart gewählt sind, dass die zugehörige Resonanzfrequenz im Wesentlichen der Frequenz des eingeprägten Stromes entspricht. Von Vorteil ist dabei, dass ein möglichst hoher Wirkungsgrad bei der berührungslosen Energieübertragung auch bei schwacher Kopplung erreichbar ist.

Bei einer vorteilhaften Ausgestaltung sind die Anpassteile im Gehäuse des Anpassmoduls kraftschlüssig und/oder formschlüssig lösbar verbindbar. Von Vorteil ist dabei, dass ein einfaches Verbinden und ein einfaches Lösen der Anpassteile ausführbar ist.

Bei einer vorteilhaften Ausgestaltung sind die Anpassteile aus Ferrit gefertigt. Von Vorteil ist dabei, dass die Induktivität über weite Bereiche anpassbar ist.

Bei einer vorteilhaften Ausgestaltung umgibt ein jeweiliges Anpassteil den jeweils zugeordneten Leitungsabschnitt teilweise, insbesondere U-förmig oder C-förmig. Von Vorteil ist dabei, dass ein einfaches Verbinden oder Lösen der Anpassteile ausführbar ist, insbesondere aus nur einer zur Leitung radialen Richtung. Die Anpassteile sind also sozusagen aufsteckbar auf den jeweiligen Leitungsabschnitt.

Bei einer vorteilhaften Ausgestaltung ist am Zentralmodul ein Schaltermodul lösbar verbindbar, mittels dessen Versorgungsleitungen steckverbindbar übergebbar ans Zentralmodul sind, wobei die Versorgungsleitungen auftrennbar sind mittels eines im Schaltermodul angeordneten Schalters, insbesondere Schützes. Von Vorteil ist dabei, dass das Schaltermodul in einfacher Weise abtrennbar ist. Somit ist ein Austausch der Elektronik in einfacher Weise ermöglicht, ohne dass die Versorgungsleitungen von den hierfür vorgesehenen Anschlusselementen im Schaltermodul zu trennen sind. Ein bloßes Trennen der Steckverbindung zwischen Schaltermodul und Zentralmodul genügt. Des Weiteren umfasst das Schaltermodul einen Netzschütz, wodurch die Versorgung des Elektrogeräts abtrennbar ist. Der Netzschütz ist beispielsweise betätigbar durch einen von Hand bedienbaren mechanischen Drehschalter. Ebenso sind die Kommunikationsleitungen abtrennbar ausgeführt.

Bei einer vorteilhaften Ausgestaltung wird aus den Versorgungsleitungen ein im Zentralmodul angeordneter Gleichrichter versorgt, welcher dem Wechselrichter eine unipolare Spannung, insbesondere Gleichspannung, speist. Von Vorteil ist dabei, dass ausgangsseitig am Wechselrichter eine Wechselspannungsquelle zur Verfügung stellbar ist, die eine hohe Frequenz, beispielsweise eine Frequenz aus dem Bereich von 10 bis 500 kHz, insbesondere besonders bevorzugt aus dem Bereich von 10 bis 30 kHz.

Bei einer vorteilhaften Ausgestaltung sind die Module jeweils abgedichtet und/oder in hoher Schutzart ausgeführt. Von Vorteil ist dabei, dass das Elektrogerät als Feldgerät, also zumindest spritzwassergeschützt ausgeführt ist.

Bei einer vorteilhaften Ausgestaltung wird mittels Trennen des Anpassmoduls vom Zentralmodul die Sekundärwicklung des Transformators von der Primärwicklung des Zentralmoduls entkoppelt. Von Vorteil ist dabei, dass ein Abnehmen des Anpassmoduls vom Zentralmodul den Strom in der Leiterschleife zum Versiegen bringt, wobei keine Funkenbildung zu erwarten ist.

Bei einer vorteilhaften Ausgestaltung weist ein Fahrzeug der Anlage eine Sekundärwicklung auf, welche induktiv koppelbar ist an die Stromleiterschleife,
wobei der Sekundärwicklung eine Kapazität parallel oder in Reihe derart zugeschaltet ist, die zugehörige Resonanzfrequenz im Wesentlichen der Frequenz des in die Stromleiterschleife eingeprägten Wechselstromes gleicht. Von Vorteil ist dabei, dass ein hoher Wirkungsgrad auch bei schwacher Kopplung erreichbar ist.

Bei einer vorteilhaften Ausgestaltung sind die Fahrzeuge schienengeführt, wobei die Stromleiterschleife langgestreckt ausgeführt ist und entlang der Schiene verlegt ist. Von Vorteil ist dabei, dass eine einfache Installation ausführbar ist und das Fahrzeug in der optimalen Position gehalten ist.

Bei einer vorteilhaften Ausgestaltung ist mittels Trennen des Anpassmoduls vom Zentralmodul ein Trennen der Versorgung der Stromleiterschleife ausführbar. Von Vorteil ist dabei, dass schon während des Trennens der Strom in der Leiterschleife abklingt und somit versiegt, ohne dass Funkenbildung oder: Brandgefahr besteht. Die Sicherheit ist somit erhöht.

Dabei ist wesentlich, dass der Transformator aus zwei trennbaren Teilen besteht, wobei die die Wicklungen des Transformators jeweils umgebenden Kerne entsprechend trennbar sind. Vorzugsweise ist jeder Kern aus Ferrit ausgeführt. Bei Ausführung der Wicklungen des Transformators jeweils als Ringwicklung ist eine Ausführung der Kerne in Topfform vorteilhaft, wobei ein Mittelschenkel zentrisch durch die jeweilige Ringwicklung hindurchragt. Beim Verbinden der Kerne ist ein geschlossener Kern bildbar, so dass der Hauptfluss der Ringwicklung durch den Mittelschenkel in den Topf geleitet wird und mittels des Topfes außen um die Ringwicklung herum zum Topfkern der anderen Wicklung des Transformators.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten Im Rahmen der beigefügten Ansprüche.

Die Erfindung wird nun anhand von Abbildungen näher erläutert:

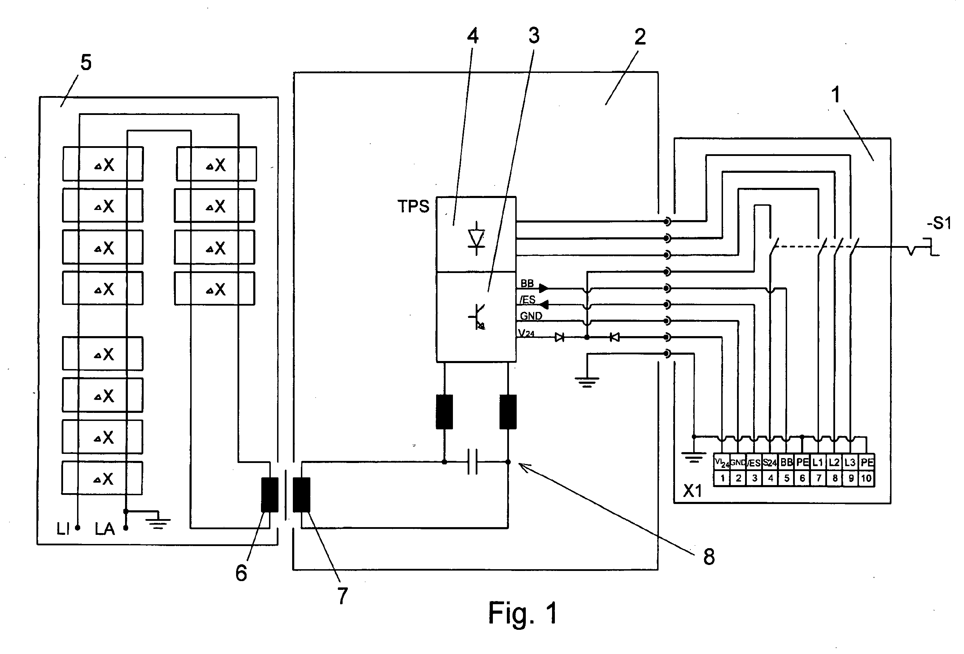

In der Figur 1 ist das Prinzip der Erfindung schematisch skizziert. Das Elektrogerät besteht aus zumindest drei lösbar verbindbaren Modulen.

Dabei werden die Versorgungsleitungen, insbesondere Drehstromleitungen, ans Schaltermodul 1 geführt, das einen Netzschütz umfasst, also einen Schalter, mit welchem das Auftrennen der zugeführten elektrischen Leitungen ermöglicht ist. Außerdem sind mit dem Schalter auch zugeführte Datenbusleitungen auftrennbar. Die Zuführung der Versorgungsleitungen ist mit den Datenbusleitungen in einem Hybridkabel ausführbar. Es sind aber auch getrennte Leitungsführungen ausführbar.

Das Schaltermodul 1 ist mittels Steckverbinder lösbar verbunden mit einem Zentralmodul 2, das die Leistungselektronik umfasst. Somit ist die gesamte Versorgung mit Leistung und Daten in einem einzigen Arbeitsgang trennbar vom Zentralmodul 2.

Die Versorgungsleitungen führen einen Wechselstrom mit einer beispielhaften Frequenz von 50 Hz oder 60 Hz.

Innerhalb des Zentralmoduls 2 ist ein Gleichrichter 4 angeordnet, welcher aus dem Wechselstrom der Versorgungsleitungen eine unipolare Spannung, insbesondere Gleichspannung, erzeugt. Diese dient zur Versorgung eines Wechselrichters 3, welcher ausgangsseitig einen einphasigen Wechselspannung mit einer Frequenz zwischen 10 und 500 kHz, vorzugsweise mit einer Frequenz zwischen 15 und 30 kHz erzeugt. Diese einphasige Wechselspannung wird einem als Gyratoranordnung 8 ausgeführten Vierpol zugeführt, deren Kapazitäten und Induktivitäten derart gewählt sind, dass die zugehörige Resonanz im Wesentlichen der Frequenz des Wechselstroms entspricht.

Auf diese Weise wird die Gyratoranordnung 8 mit einer Wechselspannung gespeist und weist ausgangsseitig ein stromquellenartiges Verhalten auf.

Der Ausgangsstrom der Gyratoranordnung 8 wird einer Primärwicklung eines Anpasstransformators zugeführt, die im Zentralmodul 2 angeordnet ist.

An das Zentralmodul 2 ist das Anpassmodul 5 lösbar verbindbar, wobei dieses eine Sekundärwicklung 6 umfasst, die induktiv koppelbar ist an die Primärwicklung 7 des Zentralmoduls 2. Das Anpassmodul 5 ist mittels Schrauben verbindbar mit dem Zentralmodul 2.

Aus der Sekundärwicklung des Anpasstransformators wird eine Stromleiterschleife versorgt, in die somit ein Wechselstrom eingeprägt ist. Die Induktivität der Stromleiterschleife wird mit einer oder mehreren Kapazitäten derart in Reihe oder parallel verschaltet, dass die zugehörige Resonanzfrequenz im Wesentlichen der Frequenz des eingeprägten Stromes entspricht.

Zur Feinabstimmung der Induktivität sind im Anpassmodul 5 Anpassteile X anordenbar, die jeweils aus Ferrit bestehen und die aus der Sekundärwicklung herausgeführten Stromleitungen zumindest teilweise umgeben in einem jeweiligen Leiterabschnitt. Statt Ferrit sind auch andere hochpermeable Kernmaterialen verwendbar.

Mittels Hinzufügen oder Weglassen von Anpassteilen X ist die Induktivität somit erhöhbar beziehungsweise erniedrigbar, wodurch eine möglichst genaue Abstimmung auf die Frequenz ausführbar ist.

Im Anpassmodul sind Aufnahmemittel, insbesondere Haltevorrichtungen, für die Anpassteile X vorgesehen. Vorzugsweise werden die Anpassteile X hierbei kraftschlüssig gehalten. Aber auch ein formschlüssiges Verhalten ist vorteilig, beispielsweise ein Einklipsen oder Schraubverbinden der Anpassteile mit dem Gehäuse des Anpassmoduls 5.

Die Stromleiterschleife wird langgestreckt in einer Anlage verlegt und ermöglicht die induktive berührungslose Versorgung von bewegbaren Objekten, wie Fahrzeugen.

Hierbei umfasst jedes Fahrzeug zumindest eine Sekundärwicklung, die induktiv koppelbar ist an einen Leiterabschnitt der Stromleiterschleife. Der Sekundärwicklung sind im Fahrzeug wiederum Kapazitäten derart in Reihe und/oder parallel zugeschaltet, dass die zugehörige Resonanzfrequenz im Wesentlichen der Frequenz des eingeprägten Stromes entspricht.

### Bezugszeichenliste

1 Schaltermodul
2 Zentralmodul mit Leistungselektronik
3 Wechselrichter
4 Gleichrichter
5 Anpassmodul
6 Sekundärwicklung
7 Primärwicklung
8 Gyratoranordnung
X Anpassteil

## Patentansprüche

1. **Modular aufgebautes** Elektrogerät mit Mitteln zur Erzeugung eines Wechselstromes,
wobei das Gerät ein Anpassmodul (5) umfasst, das lösbar an ein Zentralmodul (2) **verbunden** ist,
wobei das **Zentralmodul (2)** einen Wechselrichter (3) umfasst, der eine Gyratoranordnung (8) mit einer Wechselspannung versorgt,
wobei der Ausgangsstrom der Gyratoranordnung (8) der Primärwicklung (7) eines Transformators zugeführt wird,
wobei Wechselrichter (3), Gyratoranordnung (8) und Primärwicklung (7) im Zentralmodul (2) angeordnet sind,
wobei das Anpassmodul (5) eine Sekundärwicklung (6) **des Transformators** umfasst, aus der über Leitungsabschnitte eine Stromschleife einer das Elektrogerät umfassenden Anlage versorgbar ist,
wobei mindestens ein Anpassteil (X) mit dem Anpassmodul (5) lösbar verbindbar ist, wobei das Anpassteil (X) einen Leitungsabschnitt zumindest teilweise umgibt, wobei das Anpassteil (X) die Induktivität des Leitungsabschnittes vergrößert,
**wobei das jeweilige Anpassteil (X) im Gehäuse des Anpassmoduls (5) kraftschlüssig und/oder formschlüssig lösbar verbindbar ist und zum Verbinden, insbesondere aus einer zur Leitung radialen Richtung, aufsteckbar ist auf den jeweiligen Leitungsabschnitt,**
insbesondere so dass eine Anpassung der Induktivität ohne elektrische Berührung ermöglicht ist,
**wobei mehrere Anpassteile (X) seriell an der Leitung anordenbar sind, so dass ein Anpassen der Resonanzfrequenz an die eingespeiste Frequenz ausführbar ist.**

2. Elektrogerät nach mindestens einem der vorangegangenen Ansprüche,
**dadurch gekennzeichnet, dass**
die Stromschleife an Anschlusselemente des Anpassmoduls (5) elektrisch verbindbar ist, wobei mindestens ein Anschlusselement direkt oder über einen Leitungsabschnitt mit der Sekundärwicklung (6) verbunden ist..

3. Elektrogerät nach mindestens einem der vorangegangenen Ansprüche,
**dadurch gekennzeichnet, dass**
das Anpassteil (X) jeweils eine magnetische Permeabilität aufweist, die größer als 10 ist, insbesondere größer als 100 oder größer als 1000.

4. Elektrogerät nach mindestens einem der vorangegangenen Ansprüche,
**dadurch gekennzeichnet, dass**
die Anzahl der Anpassteile (X) derart gewählt ist, dass die an der Sekundärseite des Transformators angeordneten Induktivität und Kapazität derart gewählt sind, dass die zugehörige Resonanzfrequenz im Wesentlichen der Frequenz des eingeprägten Stromes entspricht.

5. Elektrogerät nach mindestens einem der vorangegangenen Ansprüche,
**dadurch gekennzeichnet, dass**
die Anpassteile (X) im Gehäuse des Anpassmoduls (5) kraftschlüssig und/oder formschlüssig lösbar verbindbar sind
und/oder
keine elektrisch leitende Verbindung zwischen Anpassteil (X) und Sekundärwicklung (6) besteht, insbesondere wobei eine elektrische Isolierschicht, insbesondere Luftabstand, zwischen Anpassteil (X) und elektrischer Leitung vorhanden ist.

6. Elektrogerät nach mindestens einem der vorangegangenen Ansprüche,
**dadurch gekennzeichnet, dass**
die Anpassteile (X) aus Ferrit gefertigt sind.

7. Elektrogerät nach mindestens einem der vorangegangenen Ansprüche,
**dadurch gekennzeichnet, dass**
ein jeweiliges Anpassteil (X) den jeweils zugeordneten Leitungsabschnitt teilweise umgibt, insbesondere U-förmig oder C-förmig.

8. Elektrogerät nach mindestens einem der vorangegangenen Ansprüche,
**dadurch gekennzeichnet, dass**
am Zentralmodul (2) ein Schaltermodul (1) lösbar verbindbar ist, mittels dessen Versorgungsleitungen steckverbindbar übergebbar ans Zentralmodul (2) sind, wobei die Versorgungsleitungen auftrennbar sind mittels eines im Schaltermodul (1) angeordneten Schalters, insbesondere Schützes.

9. Elektrogerät nach mindestens einem der vorangegangenen Ansprüche,
**dadurch gekennzeichnet, dass**
aus den Versorgungsleitungen ein im Zentralmodul (2) angeordneter Gleichrichter (4) versorgt wird, welcher dem Wechselrichter (3) eine unipolare Spannung, insbesondere Gleichspannung, speist.

10. Elektrogerät nach mindestens einem der vorangegangenen Ansprüche,
**dadurch gekennzeichnet, dass**
die Module jeweils abgedichtet und/oder in hoher Schutzart ausgeführt sind.

11. Elektrogerät nach mindestens einem der vorangegangenen Ansprüche,
**dadurch gekennzeichnet, dass**
mittels Trennen des Anpassmoduls (5) vom Zentralmodul (2) die Sekundärwicklung (6) des Transformators von der Primärwicklung (7) des Zentralmoduls entkoppelt wird

12. Anlage mit Elektrogerät nach mindestens einem der vorangegangenen Ansprüche, **dadurch gekennzeichnet, dass**
ein Fahrzeug der Anlage eine Sekundärwicklung (6) aufweist, welche induktiv koppelbar ist an die Stromleiterschleife,
wobei der Sekundärwicklung (6) eine Kapazität parallel oder in Reihe derart zugeschaltet ist, die zugehörige Resonanzfrequenz im Wesentlichen der Frequenz des in die Stromleiterschleife eingeprägten Wechselstromes gleicht.

13. Anlage, nach mindestens einem der vorangegangenen Ansprüche,
**dadurch gekennzeichnet, dass**
die Fahrzeuge schienengeführt sind, wobei die Stromleiterschleife langgestreckt ausgeführt ist und entlang der Schiene verlegt ist.

14. Anlage nach mindestens einem der vorangegangenen Ansprüche,
**dadurch gekennzeichnet, dass**
mittels Trennen des Anpassmoduls (5) vom Zentralmodul (2) ein Trennen der Versorgung der Stromleiterschleife ausführbar ist.

## Claims

1. Modularly constructed electrical appliance having means for generating an alternating current,
wherein the appliance comprises an adapter module (5) which is detachably connected to a central module (2),
wherein the central module (2) comprises an inverter (3) which supplies a gyrator arrangement (8) with an alternating voltage,
wherein the output current of the gyrator arrangement (8) is fed to the primary winding (7) of a transformer,
wherein inverter (3), gyrator arrangement (8) and primary winding (7) are arranged in the central module (2),
wherein the adapter module (5) comprises a secondary winding (6) of the transformer, from which secondary winding a current loop of a system comprising the electrical appliance is suppliable via line sections,
wherein at least one adapter part (X) is detachably connectable to the adapter module (5), the adapter part (X) at least partly surrounding a line section, the adapter part (X) increasing the inductance of the line section,
wherein the respective adapter part (X) is detachably connectable in a force-fitting and/or form-fitting manner in the housing of the adapter module (5) and is pluggable for connection onto the respective line section, in particular from a direction radial with respect to the line,
in particular so that an adaptation of the inductance is made possible without electrical contact,
wherein a plurality of adapter parts (X) are arrangeable in series on the line, so that an adaptation of the resonant frequency to the fed-in frequency is realisable.

2. Electrical appliance according to at least one of the preceding claims,
**characterised in that**
the current loop is electrically connectable to connecting elements of the adapter module (5), at least one connecting element being connected to the secondary winding (6) directly or via a line section.

3. Electrical appliance according to at least one of the preceding claims,
**characterised in that**
the adapter part (X) has in each case a magnetic permeability which is greater than 10, in particular greater than 100 or greater than 1000.

4. Electrical appliance according to at least one of the preceding claims,
**characterised in that**
the number of adapter parts (X) is chosen such that the inductance and capacitance arranged on the secondary side of the transformer are chosen such that the associated resonant frequency substantially corresponds to the frequency of the applied current.

5. Electrical appliance according to at least one of the preceding claims,
**characterised in that**
the adapter parts (X) are detachably connectable in a force-fitting and/or form-fitting manner in the housing of the adapter module (5)
and/or
no electrically conducting connection exists between adapter part (X) and secondary winding (6), in particular an electrical insulating layer, in particular air gap, being present between adapter part (X) and electrical line.

6. Electrical appliance according to at least one of the preceding claims,
**characterised in that**
the adapter parts (X) are produced from ferrite.

7. Electrical appliance according to at least one of the preceding claims,
**characterised in that**
a respective adapter part (X) partially surrounds the respectively assigned line section, in particular in a U-shape or C-shape.

8. Electrical appliance according to at least one of the preceding claims,
**characterised in that**
a switch module (1) is detachably connectable to the central module (2), by means of which supply lines are plug-connectably transferrable to the central module (2), the supply lines being disconnectable by means of a switch, in particular contactor, arranged in the switch module (1).

9. Electrical appliance according to at least one of the preceding claims,
**characterised in that**
a rectifier (4) arranged in the central module (2) is supplied from the supply lines, which rectifier feeds a unipolar voltage, in particular direct voltage, to the inverter (3).

10. Electrical appliance according to at least one of the preceding claims,
**characterised in that**
the modules are in each case sealed off and/or designed with a high degree of protection.

11. Electrical appliance according to at least one of the preceding claims,
**characterised in that**
the secondary winding (6) of the transformer is decoupled from the primary winding (7) of the central module by separating the adapter module (5) from the central module (2).

12. System having an electrical appliance according to at least one of the preceding claims,
**characterised in that**
a vehicle of the system has a secondary winding (6) which is inductively couplable to the current-conductor loop,
wherein a capacitance is connected in parallel or in series with the secondary winding (6) in such a way the associated resonant frequency is substantially equal to the frequency of the alternating current applied to the current-conductor loop.

13. System according to at least one of the preceding claims,
**characterised in that**
the vehicles are rail-guided, the current-conductor loop being of elongated form and being laid along the rail.

14. System according to at least one of the preceding claims,
**characterised in that**
a disconnection of the supply of the current-conductor loop is realisable by separating the adapter module (5) from the central module (2).

## Revendications

1. Appareil électrique modulaire pourvu de moyens pour générer un courant alternatif,
lequel appareil comprend un module d'adaptation (5) qui est relié de manière détachable à un module central (2),
lequel module central (2) comprend un onduleur (3) qui alimente un circuit gyrateur (8) en tension alternative,
le courant de sortie du circuit gyrateur (8) étant amené à l'enroulement primaire (7) d'un transformateur,
onduleur (3), circuit gyrateur (8) et enroulement primaire (7) étant disposés dans le module central (2),
le module d'adaptation (5) comprenant un enroulement secondaire (6) du transformateur, à partir duquel une boucle de courant d'une installation comprenant l'appareil électrique peut être alimentée via des sections de lignes,
au moins une partie d'adaptation (X) pouvant être reliée de manière détachable au module d'adaptation (5), laquelle partie d'adaptation (X) entoure au moins partiellement une section de ligne et laquelle partie d'adaptation (X) augmente l'inductance de la section de ligne,
la partie d'adaptation (X) respective pouvant être reliée de manière détachable par liaison de force et/ou de forme dans le boîtier du module d'adaptation (5) et pouvant, pour la liaison, être montée sur la section de ligne respective en particulier depuis une direction radiale par rapport à la ligne,
en particulier de façon à permettre une adaptation de l'inductance sans contact électrique,
plusieurs parties d'adaptation (X) pouvant être disposées en série sur la ligne, de sorte qu'une adaptation de la fréquence de résonance à la fréquence appliquée est réalisable.

2. Appareil électrique selon au moins l'une des revendications précédentes,
**caractérisé en ce que**
la boucle de courant peut être reliée électriquement à des éléments de connexion du module d'adaptation (5), au moins un élément de connexion étant relié à l'enroulement secondaire (6) directement ou via une section de ligne.

3. Appareil électrique selon au moins l'une des revendications précédentes,
**caractérisé en ce que**
la partie d'adaptation (X) présente chaque fois une perméabilité magnétique supérieure à 10, en particulier supérieure à 100 ou supérieure à 1000.

4. Appareil électrique selon au moins l'une des revendications précédentes,
**caractérisé en ce que**
le nombre de parties d'adaptation (X) est choisi de façon que l'inductance et la capacité disposées du côté secondaire du transformateur soient choisies de façon que la fréquence de résonance associée corresponde sensiblement à la fréquence du courant appliqué.

5. Appareil électrique selon au moins l'une des revendications précédentes,
**caractérisé en ce que**
les parties d'adaptation (X) peuvent être reliées de manière détachable par liaison de force et/ou de forme dans le boîtier du module d'adaptation (5)
et/ou
il n'existe aucune liaison électroconductrice entre partie d'adaptation (X) et enroulement secondaire (6), en particulier une couche électriquement isolante, en particulier un espace d'air, étant présent entre partie d'adaptation (X) et ligne électrique.

6. Appareil électrique selon au moins l'une des revendications précédentes,
**caractérisé en ce que**
les parties d'adaptation (X) sont réalisées en ferrite.

7. Appareil électrique selon au moins l'une des revendications précédentes,
**caractérisé en ce que**
une partie d'adaptation (X) entoure partiellement la section de ligne respectivement associée, en particulier en forme de U ou de C.

8. Appareil électrique selon au moins l'une des revendications précédentes,
**caractérisé en ce que**
un module de commutation (1) peut être relié de manière détachable au module central (2), au moyen duquel des lignes d'alimentation peuvent être transférées au module central (2) par l'intermédiaire d'une connexion par enfichage, les lignes d'alimentation pouvant être interrompues au moyen d'un commutateur, en particulier d'un contacteur, disposé dans le module de commutation (1).

9. Appareil électrique selon au moins l'une des revendications précédentes,
**caractérisé en ce que**
un redresseur (4) disposé dans le module central (2) est alimenté à partir des lignes d'alimentation, lequel fournit à l'onduleur (3) une tension unipolaire, en particulier une tension continue.

10. Appareil électrique selon au moins l'une des revendications précédentes,
**caractérisé en ce que**
les modules sont chaque fois réalisés de manière étanche et/ou avec un haut degré de protection.

11. Appareil électrique selon au moins l'une des revendications précédentes,
**caractérisé en ce que**
l'enroulement secondaire (6) du transformateur est découplé de l'enroulement primaire (7) du module central par séparation du module d'adaptation (5) du module central (2).

12. Installation avec un appareil électrique selon au moins l'une des revendications précédentes,
**caractérisée en ce que**
un véhicule de l'installation présente un enroulement secondaire (6), lequel peut être couplé par induction à la boucle conductrice,
une capacité étant branchée en parallèle ou en série avec l'enroulement secondaire (6) de façon que la fréquence de résonance associée soit sensiblement égale à la fréquence du courant alternatif appliqué dans la boucle conductrice.

13. Installation selon au moins l'une des revendications précédentes,
**caractérisée en ce que**
les véhicules sont guidés sur rail, la boucle conductrice s'étendant en longueur et étant posée le long du rail.

14. Installation selon au moins l'une des revendications précédentes,
**caractérisée en ce que**
une séparation de l'alimentation de la ligne conductrice est réalisable par séparation du module d'adaptation (5) du module central (2).
